Europäisches Patentamt

European Patent Office

Office européen des brevets

(19)

(11) Numéro de publication: **0 018 873**
**B1**

(12) **FASCICULE DE BREVET EUROPEEN**

(45) Date de publication du fascicule du brevet: **30.11.83**

(51) Int. Cl.³: **G 02 B 7/26**

(21) Numéro de dépôt: **80400489.3**

(22) Date de dépôt: **14.04.80**

(54) **Dispositif compact de couplage optique et gyromètre interferométrique à fibre optique comportant un tel dispositif.**

(30) Priorité: **02.05.79 FR 7911020**

(43) Date de publication de la demande:
**12.11.80 Bulletin 80/23**

(45) Mention de la délivrance du brevet:
**30.11.83 Bulletin 83/48**

(84) Etats contractants désignés:
**DE GB NL SE**

(56) Documents cités:
**FR - A - 2 344 855**
**US - A - 4 130 345**

(73) Titulaire: **THOMSON-CSF**
**173, Boulevard Haussmann**
**F-75379 Paris Cedex 08 (FR)**

(72) Inventeur: **Lacombat, Michel**
**"THOMSON-CSF"-SCPI 173, bld Haussmann**
**F-75360 Paris Cedex 08 (FR)**
Inventeur: **Lefevre, Hervé**
**"THOMSON-CSF"-SCPI 173, bld Haussmann**
**F-75360 Paris Cedex 08 (FR)**
Inventeur: **Pircher, Georges**
**"THOMSON-CSF"-SCPI 173, bld Haussmann**
**F-75360 Paris Cedex 08 (FR)**

(74) Mandataire: **Wang, Pierre et al,**
**THOMSON-CSF SCPI 173, Bld Haussmann**
**F-75379 Paris Cedex 08 (FR)**

Courier Press, Leamington Spa, England.

Dispositif compact de couplage optique et gyrometre interferometrique a fibre optique
comportant un tel dispositif

L'invention se rapporte au domaine des liaisons et mesures optiques et a plus particulièrement pour objet un dispositif compact de couplage optique réalisant une liaison mécanique rigide entre un élément séparateur de rayonnement et des extrémités de fibres optiques.

Lorsqu'un dispositif optique formé d'éléments discrets reçoit le rayonnement d'une source laser et doit le transmettre, après séparation, à des fibres optiques, monomodes par exemple, il est absolument nécessaire d'effectuer des réglages très précis, de façon que les pertes de couplage soient aussi faibles que possible lors du couplage du rayonnement dans la ou les fibres où il doit être transmis. En particulier, le rayonnement issu de la source doit être focalisé, et les extrémités de fibre doivent être très précisément positionnées de façon que le plan de l'extrémité passe par le point de focalisation. Ainsi, les pertes de couplage sont minimisées.

C'est en particulier le cas pour un gyromètre à fibre optique dans lequel le rayonnement issu de la source laser est transmis après séparation en deux parties égales aux deux extrémités d'une même fibre optique enroulée. Pour que les pertes de couplage soient minimum, l'élément séparateur et les extrémités de la fibre doivent être très précisément localisés les uns par rapport aux autres. De plus, le positionnement doit être fixe de façon que le signal reçu après recombinaison des ondes émergeant de la fibre après avoir circulé en sens contraires, soit stable dans le temps lorsque la vitesse de rotation du gyromètre est constante.

Il est connu de par le brevet US—A—4 130 345 (BOEING) de coupler des fibres entre elles à l'aide d'un élément séparateur constitué par une lame semitransparente mince, les faces terminales des fibres à coupler étant planes. Ces caractéristiques constituent le préambule de la revendication 1. Cependant, les éléments participant au couplage optique sont des éléments discrets et aucune structure n'est décrite permettant de solutionner le couplage optique de ces fibres avec une source lumineuse offrant une grande stabilité dans le temps.

L'invention propose un dispositif compact de couplage optique qui évite les inconvénients des dispositifs de couplage formés d'éléments séparés et qui donc ne nécessite aucun réglage. Un tel dispositif a l'avantage de la stabilité, le positionnement de ses composants les uns par rapport aux autres étant définitivement réalisé et non susceptible d'être modifié.

L'objet de l'invention est donc un dispositif compact de couplage optique destiné au couplage optique du rayonnement issu d'une source avec au moins deux extrémités de fibre optique comportant un élément optique de séparation ou de recombinaison dudit rayonnement muni d'au moins un plan de séparation ou de recombinaison; les extrémités de fibres optique étant solidaire de deux embouts ayant chacun une face plane d'extrémité et un canal central orthogonal à cette face plane maintenant rigidement une desdites extrémités de fibre optique; caractérisé en ce que l'élément optique de séparation ou de recombinaison est un élément massif au sein duquel est disposé ledit plan de séparation ou de recombinaison, ce élément comportant au moins deux faces planes symétriques par rapport au plan de séparation ou de recombinaison et une face plane supplémentaire dite face d'entrée, et en ce que, les extrémités des fibres optiques affleurant aux faces planes desdits embouts, il comprend des moyens de fixation des embouts sur lesdits faces planes symétriques de l'élément de séparation faces planes symérqieus de l'élément de séparation ou de recombinaison par rapport au plan de séparation ou de recombinaison et une lentille plan-convexe dont la face plane est collée sur ladite face d'entrée de l'élément optique et dont la face d'entrée convexe est telle que le rayonnement d'axe orthogonal à la face plane est focalisé sur les extrémités de fibre.

L'invention a également pour objet un gyromètre interférométrique à fibre optique selon la revendication 5 comportant un tel dispositif compact de couplage optique.

L'invention sera mieux comprise et d'autre caractéristiques apparaîtront à l'aide de la description qui suit en référence aux figures annexées:

— la figure 1 représente un premier mode de réalisation du dispositif compact de couplage optique suivant l'invention;
— la figure 2 représente un second mode de réalisation du dispositif compact de couplage optique suivant l'invention;
— la figure 3 représente un gyromètre interférométrique à fibre optique comportant un tel dispositif de couplage.

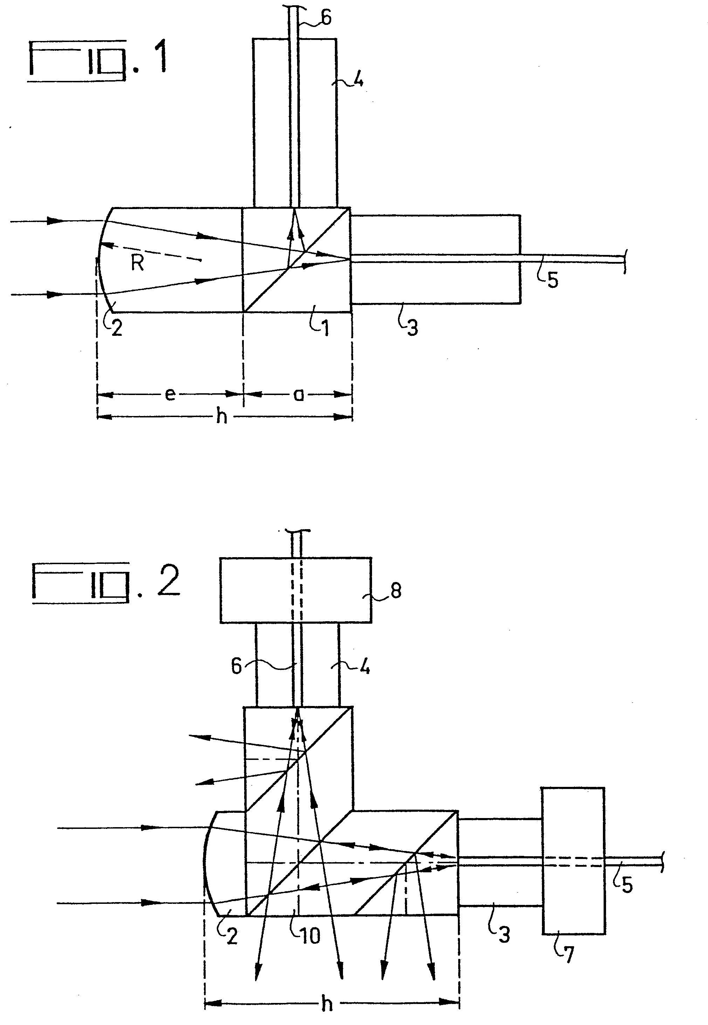

Le mode de réalisation du dispositif compact de couplage optique représenté sur la figure 1 comporte un cube séparateur en silice de petite taille, 1, typiquement d'arête égale à 5 mm, dont les faces sont très planes. La planéité de ces faces peut être de l'ordre de $\lambda/8$, $\lambda$ étant la longueur d'onde du rayonnement issu d'une source monochromatique que cet élément séparateur doit transmettre. Une micro-lentille plan-convexe 2, de diamètre D, D étant égale à l'arête du cube séparateur, de rayon de courbure R et d'épaisseur e, également en silice, est collée sur l'une des faces d'entrée du cube séparateur. Le rayon de courbure R et l'épaisseur e de la micro-lentille plan convexe sont tels qu'un rayonnement collimaté d'axe orthogonal à la face plane, incident sur la face sphérique soit focalisé sur les faces de sortie du cube séparateur. Par exemple pour a=5 mm et e=7 mm, la longueur h du parcours lumineux dans la silice est égale à 12 mm et le rayon de courbure R correspondant est de 4 mm. Deux embouts en silice de section carrée, 3 et 4, enserrant chacun une extrémité de fibre optique, respectivement 5 et 6, sont collés sur les faces de sortie du cube séparateur, après que les extrémités des fibres aient été positionnées convenablement. Pour cela, l'extrémité de la fibre est enserrée dans un canal formé dans l'embout centré par rapport à cet embout, et est polie jusqu'à affleurer à l'extrémité de l'embout. Puis, l'embout muni de la fibre est placé contre la face de sortie correspondante du cube séparateur, et sa position dans cette face de sortie est ajustée au moyen de mouvements de translation micrométriques de façon qu'un rayonnement parallèle de même axe que la lentille soit focalisé sur l'extrémité de la fibre et que inversement, la direction centrale d'un rayonnement émergeant de la fibre soit bien perpendiculaire à la surface plane de l'extrémité de l'embout, et donc à la face correspondante du cube séparateur. Lorsque l'embout est convenablement positionné par rapport au cube séparateur et à la microlentille, une colle photopolymérisable, par exemple, déposée entre la face de sortie du cube séparateur et l'extrémité de l'embout est soumise à un rayonnement qui permet une prise rapide.

Lorsque les deux embouts enserrent les extrémités d'une même fibre optique, la fibre optique est parcourue simultanément dans les deux sens par deux fractions du rayonnement, et les rayonnements émergeant des deux extrémités de la fibre sont recombinés par le cube séparateur qui agit donc sur le trajet aller du rayonnement comme élément de séparation et sur le trajet retour du rayonnement comme élément de recombinaison. Un tel dispositif est particulièrement utilisable pour un gyromètre interférométrique à fibre optique enroulée.

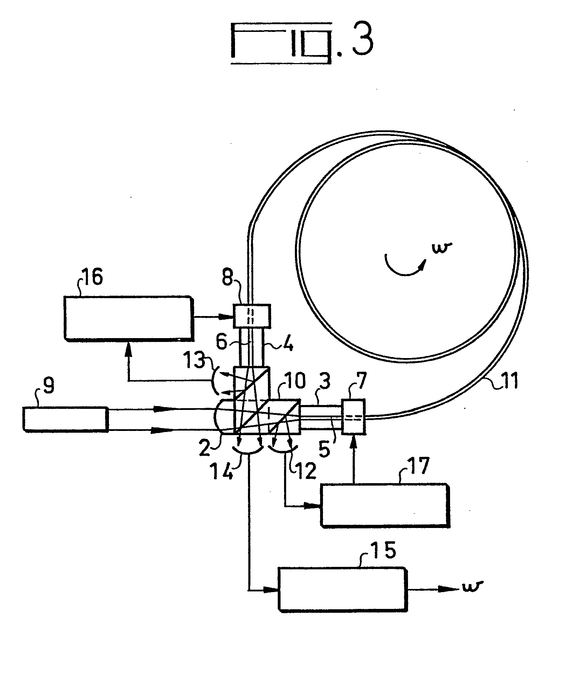

La figure 2 représente un second mode de réalisation du dispositif compact de couplage optique suivant l'invention. Sur cette figure, le cube séparateur 1 de la figure 1 est remplacé par un élément complexe de séparation et de recombinaison du rayonnement, 10. Cet élément est en fait composé de 3 cubes séparateurs accolés, et est destiné à effectuer plusieurs séparations successives du rayonnement, ou bien à séparer le rayonnement de retour émergeant de la fibre après circulation, par exemple dans l'application au gyromètre interférométrique, gyromètre dans lequel on souhaite prélever une fraction du rayonnement de retour émergeant de chaque extrémité de la fibre après recombinaison. Cet élément optique 10 peut être formé de plusieurs cubes séparateurs collés les uns aux autres, la face d'entrée d'un cube étant collée à la face de sortie du cube précédent, ou bien être taillé dans une seule masse. Dans ce second mode de réalisation, le chemin optique dans l'élément optique de séparation étant plus long, l'épaisseur de la lentille est diminuée de façon que le rayonnement incident soit toujours focalisé aux extrémités de fibre enserrées dans les embouts 3 et 4.

Le rayon de courbure de la face convexe et la distance h qui lui est associée sont choisis en fonction du faisceau collimaté pour que le cône de lumière dans la silice corresponde à l'ouverture numérique de la fibre, dans la silice.

De plus, il est possible de prévoir après les embouts 3 et 4, des éléments actifs 7 et 8 agissant sur la fibre de manière à introduire les rotations de polarisation qui seraient nécessaires pour améliorer les conditions de fonctionnement d'un circuit optique d'utilisation, par exemple pour ajuster la polarisation du rayonnement incident dans la fibre sur une direction particulièrement adaptée pour obtenir de bonnes conditions de propagation.

La figure 3 représente un gyromètre interférométrique à fibre optique utilisant le dispositif de couplage compact représenté sur la figure 2. Le dispositif comporte une source laser 9 convenablement positionnée par rapport au dispositif de couplage formé de la lentille 2 et de l'ensemble 10 constitué de trois cubes séparateurs, de façon que l'axe optique du rayonnement laser émergeant de la source 9 soit orthogonal à une face de sortie de ce dispositif de couplage. Les embouts 3 et 4 enserrent les extrémités 5 et 6 d'une fibre optique monomode enroulée 11. Ainsi, le rayonnement issu de la source laser 9 est partagé par le cube séparateur collé à la lentile 2 en deux fractions égales dirigées vers les deux extrémités de la fibre. La fibre optique enroulée est donc parcourue simultanément dans les deux sens par le rayonnement et les deux ondes émergeant des extrémités de la fibre sont recombinées par ce même cube séparateur. Auparavant, sur le trajet retour du rayonnement, les deux cubes séparateurs annexes collés aux faces de sortie du premier, séparent le rayonnement émergeant de chaque extrémité de fibre de façon que les détecteurs 12 et 13, captant des fractions du rayonnement émergeant non recombinées, délivrent des signaux caractéristiques de l'amplitude des ondes émergeant de la fibre. Les parties recombinées du rayonnement émergeant des extrémités de cette fibre sont dirigées vers un détecteur 14 fournissant le signal d'interférence entre les deux ondes émergeant de cette fibre, ce signal d'interférence étant directement lié au déphasage entre les deux ondes émergentes, le déphasage étant lui-même directement proportionnel à la vitesse de rotation de l'ensemble autour de l'axe de l'enroulement de fibre. Un circuit de traitement 15 permet de fournir un signal proportionnel à la vitesse de rotation $\omega$ du gyromètre. Les détecteurs 12 et 13 fournissent des signaux traités par des circuits d'asservissement 16 et 17 agissant sur les conditions de propagation dans la fibre de façon à maintenir toujours les signaux émergeant à un maximum d'intensité. Le dispositif compact de couplage suivant l'invention permet de s'affranchir des vibrations induites dans la structure et donc des variations d'intensité des signaux reçus induites par ces vibrations.

L'invention n'est pas limitée aux modes de réalisation précisément décrits en référence aux figures 1 et 2, ni à l'application décrite en référence à la figure 3 pour un gyromètre interférométrique à fibre optique. Cette technique de couplage compacte peut être mise en oeuvre pour éviter le réglage du positionnement d'une fibre par rapport à des éléments de séparation ou de recombinaison du rayonnement. Cette technique peut être également utilisée dans un hydrophone à fibre optique comportant une fibre optique formant bras de mesure et une fibre optique formant bras de référence. Un tel dispositif nécessite alors la mise en oeuvre de deux dispositifs compacts de couplage, l'un comportant une micro-lentille plan collée à une face d'entrée d'un cube séparateur, deux embouts étant collés aux faces de sortie de ce cube séparateur, ces embout enserrant les premières extrémités d'une fibre optique formant bras de mesure et d'une fibre optique formant bras de référence. Les secondes extrémités de ces deux fibres sont enserrées dans deux embouts analogues collés à deux faces d'un cube séparateur permettant la recombinaison du rayonnement émergeant de ces deux fibres. Un tel hydrophone permetteait, du fait des dispositifs compacts de couplage optique susdécrits, de s'affranchir des vibrations liées à la structure, les extrémités des fibres optiques étant toujours convenablement positionnées par rapport aux éléments optiques de séparation ou de recombinaison du rayonnement.

Les dimensions du dispositif compact de couplage sont telles que ce dispositif peut être directement associé à une source laser fournissant un rayonnement collimaté sans qu'il soit nécessaire d'introduire sur le trajet du rayonnement un élargisseur de faisceau.

**Revendications**

1. Dispositif compact de couplage optique destiné au couplage optique du rayonnement issu d'une source avec au moins deux extrémités (5, 6) de fibre optique comportant un élément optique (1) de séparation ou de recombinaison dudit rayonnement muni d'au moins un plan de séparation ou de recombinaison; les extrémités de fibre optique étant solidaire de deux embouts (3, 4) ayant chacun une face plane d'extrémité et un canal central orthogonal à cette face plane maintenant rigidement une desdites extrémités de fibre optique; caractérisé en ce que l'élément optique (1) de séparation ou de recombinaison est un élément massif au sein duquel est disposé ledit plan de séparation ou de recombinaison, cet élément (1) comportant au moins deux faces planes symétriques par rapport au plan de séparation ou de recombinaison et une face plane supplémentaire dite face d'entrée, et en ce que, les extrémités des fibres optiques affleurant aux faces planes desdits embouts (3, 4), il comprend des moyens de fixation des embouts sur lesdites faces planes symetriques de l'élément de séparation ou de recombinaison par rapport au plan de séparation ou de recombinaison et une lentille plan-convexe (2) dont la face plane est collée sur ladite face d'entrée de l'élément optique (1) et dont la face d'entrée convexe est telle que le rayonnement d'axe orthogonal à la face plane est focalisé sur les extrémités de fibre.

2. Dispositif selon la revendication 1, caractérisé en ce que l'élément optique de séparation ou de recombinaison (1) est un cube séparateur.

3. Dispositif selon la revendication 1, caractérisé en ce que l'élément optique de séparation ou de recombinaison (1) comporte plusieurs plans de séparation ou de recombinaison.

4. Dispositif selon l'une quelconque des revendications 1 à 3, destiné à la recombinaison du rayonnement émergeant des deux extrémités de fibres (5, 6), caractérisé en ce que des moyens de détection (12—14) sont fixés à au moins une face dite face de sortie de l'élément optique de séparation ou de recombinaison.

5. Gyromètre interférométrique à fibre optique comportant un dispositif compact de couplage selon l'une quelconque des revendications précédentes, caractérisé en ce que les deux extrémités de fibre sont les extrémités d'une même fibre optique monomode (11) enroulée, l'élément optique (1) étant destiné au couplage du rayonnement issu d'une source laser (9) aux deux extrémités de la fibre (11) d'une part, et à la recombinaison du rayonnement émergeant de ces deux extrémités de fibre après circulation dans cette fibre (11) en sens contraires d'autre part.

**Patentansprüche**

1. Kompakte optische Kopplungsvorrichtung zur optischen Einkopplung der von einer Quelle abgegebenen Strahlung in wenigstens zwei Enden (5, 6) einer optischen Faser, mit einem optischen Element (1) zur Teilung oder Rekombination der Strahlung, welches mit wenigstens einer Teiler- oder Rekombinationsebene versehen ist; wobei die Enden der optischen Faser mit jeweils einem Endstück (3, 4) fest verbunden sind, das eine ebene Endfläche und einen mittigen, zu dieser ebenen Fläche senkrechten Kanal aufweist, welcher eines der Enden der optischen Faser starr festhält; dadurch gekennzeichnet, daß das optische Teiler- oder Rekombinationselement (1) ein massives Teil ist, im Inneren desselben die genannte Teiler- oder Rekombinationsebene angeordnet ist, wobei dieses Teil (1) wenigstens zwei ebene, zu der Teiler- bzw. Rekombinationsebene symmetrische Flächen und eine zusätzliche, als Eintrittsfläche bezeichnete ebene Fläche aufweist, und daß, während die Enden der optischen Fasern mit den ebenen Flächen der Endstücke (3, 4) bündig sind, die Vorrichtung Mittel zur Befestigung der Endstücke auf den genannten ebenen Flächen des Teiler- oder Rekombinationselementes, die symmetrisch in bezug auf die Teiler- bzw. Rekombinationsebene sind, und eine plankonvexe Linse (2) enthält, deren ebene Fläche auf die genannte Eintrittsfläche des optischen Elementes (1) aufgeklebt und deren konvexe Eintrittsfläche derart ausgebildet ist, daß die eine auf der ebenen Fläche senkrechte Achse aufweisende Strahlung auf die Enden der Faser fokussiert wird.

2. Vorrichtung nach Anspruch 1, dadurch gekennzeichnet, daß das optische Teiler- oder Rekombinationselement (1) ein Teilerkubus ist.

3. Vorrichtung nach Anspruch 1, dadurch gekennzeichnet, daß das optische Teiler- oder Rekombinationselement (1) mehrere Teiler- bzw. Rekombinationsebenen aufweist.

4. Vorrichtung nach einem der Ansprüche 1 bis 3, die bestimmt ist zur Rekombination der aus den beiden Enden der Fasern (5, 6) austretenden Strahlung, dadurch gekennzeichnet, daß Detektionsmittel (12—14) an wenigstens einer, als Austrittsfläche bezeichneten Flächen des optischen Teiler- oder Kombinationselementes befestigt sind.

5. Interferrometrisches, mit optischer Faser arbeitendes Gyrometer, mit einer kompakten Kopplungsvorrichtung nach einem der vorstehenden Ansprüche, dadurch gekennzeichnet, daß die beiden Faserenden die Enden derselben, aufgewickelten optischen Monomodefaser (11) sind, wobei das optische Element (1) einerseits zum Einkoppeln der von einer Laserquelle (9) abgegebenen Strahlung in die beiden Enden der Faser (11) und andererseits zum Rekombinieren der von diesen beiden Faserenden ausgehenden Strahlung nach Durchlaufen dieser Faser (11) in entgegengesetzten Richtungen bestimmt ist.

## Claims

1. Compact optical coupling device for optically coupling the radiation from a source to at least two ends (5, 6) of an optical fiber, comprising an optical member (1) for separation or recombination of said radiation, having at least one separation or recombination plane; the optical fiber ends being joined with two butt pieces (3, 4) each having a plane end face and a central channel which is perpendicular to said plane face and rigidly holds one of said optical fiber ends; characterized in that the optical separation or recombination member (1) is a solid member within which said separation or recombination plane is located, said member (1) comprising at least two plane faces which are symmetrical with respect to the separation or recombination plane, and one additional plane, termed an entrace face, and in that, the ends of the optical fiber being flush with said plane faces of said butt pieces (3, 4), it comprises means for securing the butt pieces on said plane faces of the separation or recombination member which are symmetrical with respect to the separation or recombination plane, and a plano-convex lens (2) the plane face of which is bonded onto said entrance face of the optical member (1) and the convex entrance face of which is such that the radiation having an axis which is perpendicular to said plane face is focused onto the ends of the fiber.

2. Device in accordance with claim 1, characterized in that the optical separation or recombination member (1) is a separator tube.

3. Device in accordance with claim 1, characterized in that the optical separation or recombination member (1) comprises a plurality of separation or recombination planes.

4. Device in accordance with any of claims 1 to 3, for the recombination of radiation emerging from the two fiber ends (5, 6), characterized in that detection means (12—14) are fixed to at least one face, termed an outlet face, of said optical separation or recombination member.

5. Interferometric optical fiber gyrometer, comprising a compact coupling device in accordance with any of the preceding claims, characterized in that the two fiber ends are the ends of the same, wound-up optical monomode fiber (11), the optical member (1) being used for coupling the radiation issued from a laser source (9) to the two ends of the fiber (11) on the one hand and for the recombination of radiation emerging from these two fiber ends after having travelled through said fiber (11) in opposite senses, on the other hand.

**0018 873**

Fig. 1

Fig. 2

Fig. 3